# FASCICULE DE BREVET EUROPEEN

(11) **EP 2 139 738 B1**
(45) Date de publication et mention de la délivrance du brevet: **29.09.2010**
(21) Numéro de dépôt: 07871931.7
(22) Date de dépôt: 13.12.2007
(51) Int. Cl.: B60W 30/18, B60W 10/18

(54) **PROCEDE DE FREINAGE RECUPERATIF POUR VEHICULE HYBRIDE TENANT COMPTE D'UN APPUI PEDALE ET D'UN GRADIENT DE PRESSION POUR L'APPLICATION D'UN FREINAGE ELECTRIQUE**
REGENERATIVES BREMSVERFAHREN FÜR HYBRIDFAHRZEUGE UNTER BERÜCKSICHTIGUNG EINES PEDALDRUCKS UND EINES PEDALGRADIENTEN ZUR ANWENDUNG EINES ELEKTRISCHEN BREMSSYSTEMS
REGENERATIVE BRAKING METHOD FOR HYBRID VEHICLES, TAKING ACCOUNT OF A PEDAL PRESSURE AND A PRESSURE GRADIENT FOR THE APPLICATION OF ELECTRIC BRAKING

(30) Priorité: 18.12.2006 FR 0655612
(43) Date de publication de la demande: 06.01.2010
(73) Titulaire: Peugeot Citroën Automobiles SA, 78140 Vélizy-Villacoublay (FR)
(72) Inventeur: BOATAS, Armand Pierre Antoine, 92310 Sevres (FR); KRASZNAI, Joseph, 78250 Mezy-sur-Seine (FR); MULOT, Vincent, 75013 Paris (FR); DELPLACE, Rémy, 90400 Bemont (FR); MECHIN, Olivier, 70400 Vyans-le-Val (FR)
(86) Numéro de dépôt international: PCT/FR2007/052508
(87) Numéro de publication internationale: WO 2008/078048

(56) Documents cités:
- EP-A- 1 642 795
- WO-A-03/059674
- WO-A1-2005/115784
- US-A1- 2004 054 450

## Description

L'invention concerne un procédé de freinage pour véhicules hybrides dans lequel un couple de freinage récupératif et un couple de freinage dissipatif sont appliqués aux roues. L'invention a notamment pour but d'adapter le couple de freinage récupératif en fonction de la vitesse de l'enfoncement de la pédale de frein, tout en garantissant un bon contrôle du véhicule. L'invention trouve une application avantageuse avec les véhicules hybrides mais elle pourrait également être mise en oeuvre avec les véhicules tout électrique.

Les systèmes de freinage dans lesquels un couple de freinage récupératif et un couple de freinage dissipatif sont appliqués aux roues sont connus. Le couple de freinage récupératif est appliqué aux roues par l'action d'une machine électrique jouant un rôle de génératrice pour recharger une batterie à laquelle elle est reliée. Le couple de freinage dissipatif est appliqué aux roues au moyen de freins à disque ou à tambour qui appliquent un effort de friction sur un élément mobile tournant avec les roues.

Deux types de freinage récupératifs existent et sont distingués par la législation européenne de freinage. Le premier type est un système à récupération de catégorie A exerçant un couple de freinage aux roues sans action du conducteur sur la pédale de frein, en cas de lever de pied sur la pédale d'accélérateur.

Le deuxième type est un système à récupération de catégorie B exerçant un couple de freinage commandé par la pédale de frein. L'invention trouve une application avantageuse dans ce type de systèmes. Ces systèmes permettent notamment de découpler l'action, exercée sur la pédale de frein, du couple réalisé par le système de freinage dissipatif conventionnel. Ainsi, ils offrent la possibilité de piloter la répartition entre le frein récupératif réalisé par la chaîne de traction électrique et le frein dissipatif réalisé par le système de freinage hydraulique conventionnel.

L'inconvénient de ces dispositifs est qu'ils ajoutent un coût significatif au véhicule. En outre, des risques en sûreté de fonctionnement et de qualité à l'usage en raison de leur complexité intrinsèque leur sont associés.

Ainsi, le document JP2003-284202 et WO 2005115784 décrivent un procédé de gestion de répartition entre le système de freinage conventionnel et le freinage récupératif de la machine électrique. Ce procédé comporte une étape consistant à augmenter le freinage récupératif alors que la pédale de frein est actionnée. Toutefois, ce procédé implique une modification intrinsèque du système de freinage hydraulique.

Le dispositif de freinage récupératif selon l'invention se propose de résoudre les inconvénients précités.

A cette fin, il repose sur des modifications mineures de l'architecture matérielle de freinage déjà existante et maîtrisée. En effet, en ajoutant des éléments logiques qui relient l'appui pédale au déclenchement du frein dans un système de catégorie A, il permet d'augmenter la récupération d'énergie pendant les phases de freinage.

Plus précisément, l'invention consiste, en supplément de la décélération réalisée en lever de pied lorsqu'un appui du conducteur sur la pédale de frein est détecté, à ajouter un couple de freinage électrique supplémentaire (dans la mesure où l'état de la machine électrique le permet). Ce couple de freinage est maintenu constant tant que l'appui est prolongé. Si le freinage est stoppé, il est alors immédiatement annulé.

L'application du couple de freinage électrique fait l'objet d'un filtrage de type premier ordre paramétrable pour permettre le dosage de ce couple de freinage. Ainsi, pour des dynamiques lentes d'activation, c'est-à-dire lors d'un appui lent sur la pédale de frein, le couple de freinage électrique est appliqué sous forme d'un échelon filtré par un filtre linéaire de premier ordre de dynamique lente qui est paramétrable. Tandis que pour des dynamiques rapides d'activation, c'est-à-dire lors d'un appui rapide sur la pédale de frein, le couple de freinage électrique peut être appliqué avec un filtre de premier ordre plus rapide (également paramétrable).

Afin de distinguer ces deux situations de vie différentes (dynamique rapide ou lente d'activation), un signal de gradient de pression du maître cylindre est utilisé. Ce gradient de pression permet de moduler la dynamique d'application de l'effort par la machine électrique.

Dans une mise en oeuvre, le superviseur de freinage détecte la situation de vie de freinage et demande l'application d'un couple de freinage électrique supplémentaire. Ce couple de freinage est réalisé par la machine électrique par l'intermédiaire de son calculateur. Il est calibré de manière à ne jamais dépasser une limite « acceptable » par le conducteur en termes d'agrément.

En cas d'activation d'une fonction ABS (Anti-lock Braking System en anglais) et/ou ESP (Electronic Stability Program en anglais) suite à la détection d'un blocage ou d'un glissement de roue, le superviseur frein interrompt sa demande de freinage de catégorie B et passe en régulation. Dans tous les cas, le superviseur de freinage est maître du couple de freinage appliqué sur le véhicule.

L'invention concerne donc un procédé de freinage pour un véhicule, notamment un véhicule automobile hybride, comportant un moteur thermique et une machine électrique formant une chaîne de traction, cette chaîne de traction étant reliée à des roues du véhicule, ce véhicule comportant une pédale de frein qui commande le freinage hydraulique du véhicule, ce procédé comportant les étapes suivantes, lorsqu'un appui sur la pédale de frein du véhicule est détecté :
- on compare la valeur du gradient de pression hydraulique engendré par cet appui à une valeur seuil,
- si ce gradient de pression est supérieur à ce seuil alors on calcule la réponse d'un premier filtre à un échelon ayant la valeur du couple maximal de la machine électrique,
- si ce gradient de pression est inférieur à ce seuil alors on calcule la réponse d'un deuxième filtre à un échelon ayant la valeur du couple maximal de la machine électrique, puis
- on commande la machine électrique de sorte que le couple électrique de freinage de cette machine appliqué sur les roues suive la réponse calculée,
- les premier et deuxième filtres étant des filtres du premier ordre,
- le premier filtre ayant une constante de temps inférieure à celle du deuxième filtre.

L'invention sera mieux comprise à la lecture de la description qui suit et à l'examen des figures qui l'accompagnent. Ces figures ne sont données qu'à titre illustratif mais nullement limitatif de l'invention. Elles montrent :
- figure 1 : une représentation schématique d'un véhicule hybride mettant en oeuvre le procédé de freinage récupératif selon l'invention ;
- figure 2 : un diagramme représentant des étapes mises en oeuvre par le procédé selon l'invention.

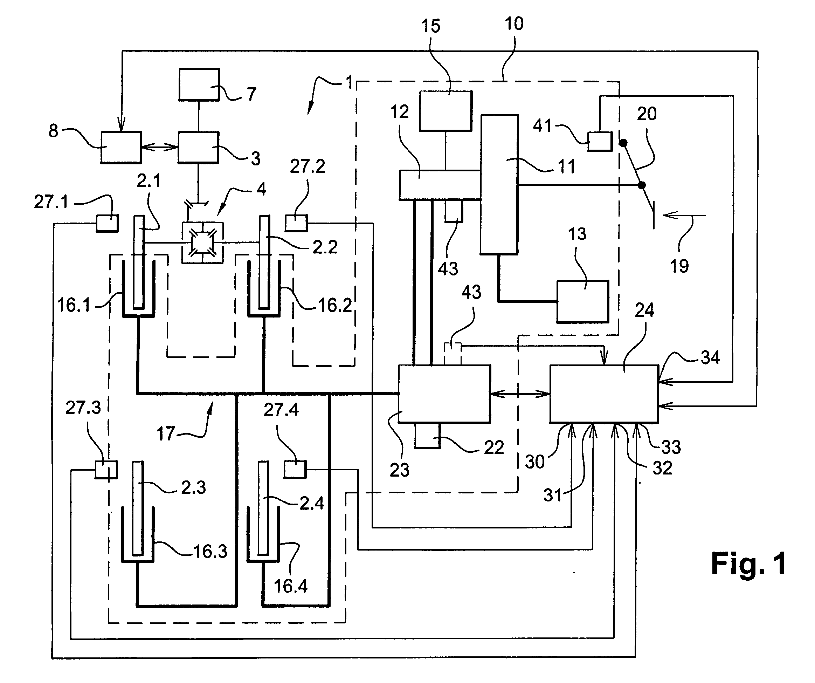

La figure 1 montre un véhicule 1 hybride mettant en oeuvre le procédé selon l'invention. Des roues 2.1, 2.2 avant de ce véhicule qui fonctionnent en tant que roues motrices sont entraînées par une machine 3 électrique et un moteur thermique (non représenté). Cette machine 3 et ce moteur peuvent par exemple être reliés entre eux par l'intermédiaire d'un embrayage et ils peuvent être accompagnés d'une boite de vitesses pilotée ou d'une CVT (Continuously Variable Transmission).

La machine 3 électrique est reliée à l'arbre de ces roues par l'intermédiaire d'un ensemble différentiel 4. Cette machine 3 est également reliée à une batterie 7 par l'intermédiaire d'un circuit de puissance.

La machine électrique 3 transmet aux roues 2.1-2.4 un couple de freinage récupératif lorsqu'elle fonctionne en mode générateur pour recharger la batterie 7 et que son arbre est entraîné par les roues. Cette phase de recharge se produit lors d'une décélération ou d'un freinage.

Un superviseur 8 commande le couple appliqué par la chaîne de traction formée du moteur thermique et de la machine 3 électrique. En particulier, le superviseur 8 commande le couple de freinage appliqué par la machine 3 aux roues 2.1-2.4.

Par ailleurs, le véhicule 1 comporte un système 10 de freinage hydraulique. Ce système 10 comporte un dispositif d'assistance au freinage par dépression 11 qui amplifie l'effort fourni par le conducteur sur la pédale 20. A cet effet, le dispositif 11 est relié à une source 13 de vide qui permet d'avoir des pressions différentes sur le piston qu'il comporte (non représenté). Ce dispositif 11 est relié à un maître-cylindre 12 alimenté en liquide par un réservoir 15. Ce maître-cylindre 12 est relié aux freins 16.1-16.4 par l'intermédiaire d'un réseau 17 de canalisations.

Ainsi, lorsque le conducteur appuie 19 sur la pédale 20 pour freiner, l'ensemble amplificateur 11 et maître-cylindre 12 transforme la force mécanique fournie par le conducteur (l'appui sur le frein) en une pression hydraulique. Les canalisations transmettent alors cette pression hydraulique aux freins 16.1-16.4. Ces freins transforment cette pression en une force capable de d'actionner les plaquettes contre les roues 16.1-16.4. Les freins transforment ainsi la pression hydraulique en un couple de freinage.

En outre, le véhicule comporte un système de régulation de freinage de type ESP. Ce système comporte un groupe hydraulique 23 relié au maître-cylindre 12 et au réseau 17 de canalisation. Ce groupe hydraulique 23 est muni d'une pompe 22 et est associé à un superviseur de freins 24. En outre, le système de régulation comporte des capteurs 27.1-27.4 mesurant la vitesse des roues qui sont reliés à des entrées 30-33 du superviseur 24.

Ainsi, dès qu'une roue 2.1-2.4 du véhicule présente une vitesse de rotation anormale (glissement ou blocage), le superviseur 24 agit sur le groupe hydraulique 23 afin que le freinage de la roue soit supprimé partiellement ou totalement par baisse ou surpression de la pression hydraulique dans le frein concerné selon le type de frein utilisé. Si le système de régulation de freinage comporte une fonction de type ESP, il peut également rectifier la trajectoire du véhicule si cette dernière s'éloigne d'une trajectoire attendue.

En outre, le véhicule 1 comporte un capteur 41 contacteur de frein de type BLS qui permet de détecter l'enfoncement de la pédale 20 de frein. A cet effet, le signal émis par ce capteur est un 0 logique lorsque la pédale n'est pas enfoncée, tandis que le signal émis est un 1 logique lorsque la pédale est enfoncée. Ce capteur est relié à une entrée 34 du superviseur 24.

Un capteur 43 de pression est positionné sur le bloc 23 hydraulique ou sur le maître-cylindre 12 afin de mesurer la pression hydraulique du liquide de freinage, ainsi que le gradient de pression de ce liquide. Ce capteur est également relié à une entrée du superviseur 24.

Sur la figure 1, le couple de freinage dissipatif est appliqué aux quatre roues, tandis que le couple de freinage électrique est appliqué uniquement sur l'essieu tracteur ou propulseur. Néanmoins, l'invention est également applicable dans le cas d'une transmission intégrale.

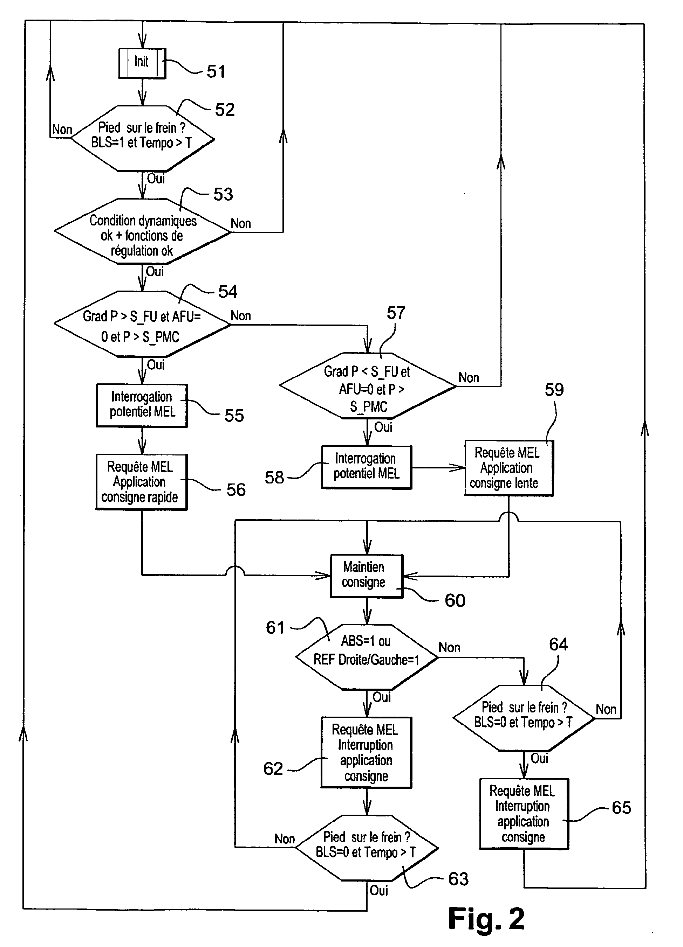

La figure 2 montre un diagramme des étapes mises en oeuvre dans le procédé selon l'invention.

Après démarrage du véhicule, le véhicule s'active et passe à une étape d'initialisation 51. On entend par démarrage du véhicule, l'activation de la chaîne de traction à l'arrêt, le moteur thermique n'étant pas forcément démarré. Dans l'étape d'initialisation 51, les différentes fonctions de commande et de régulations des organes du système de freinage de la chaîne de traction sont testées et/ou initialisées.

Ensuite, le véhicule passe à une étape 52 dans laquelle le superviseur 24 détecte si un enfoncement de la pédale 20 se produit. Cet enfoncement de la pédale de frein se produit si le capteur BLS émet un signal de niveau 1 pendant une durée supérieure à une durée de temporisation T.

Si aucun enfoncement de la pédale n'est détecté, on retourne à l'étape 51 d'initialisation. En revanche, si un enfoncement de la pédale de frein est détecté, on passe à une étape 53.

Dans cette étape 53, le superviseur 24 détecte si les fonctions dynamiques du véhicule sont normales, c'est-à-dire si la vitesse, l'accélération latérale, et l'angle au volant mesurés à l'aide de capteurs du véhicule sont telles qu'il n'est pas nécessaire d'activer des fonctions de régulation ABS et/ou ESP du système de freinage. Le superviseur 24 détecte également si ces fonctions de régulation ABS et/ou ESP sont déjà en cours d'activation ou non.

Si les fonctions dynamiques du véhicule ne sont pas normales (ce qui implique que le véhicule se trouve dans une situation de freinage difficile dans un virage, en pente ou à forte vitesse) et/ou si les fonctions de régulation ABS et/ou ESP du système de freinage sont activées, alors on revient à l'étape 51. En revanche, si les fonctions dynamiques du véhicule sont normales et si les fonctions de régulation ABS ou ESP du système de freinage ne sont pas activées, alors on passe à l'étape 54. En variante, on passe à l'étape 54 lorsqu'une seule de ces deux conditions est vérifiée.

Dans cette étape 54, le superviseur 24 effectue une analyse du gradient de pression gradP maître-cylindre. Si ce gradient de pression gradP est supérieur à un seuil S FU de l'ordre de 600 bar/s mais pas suffisant pour activer la fonction d'aide au freinage d'urgence électronique AFU, c'est-à-dire que ce gradient est inférieur à un seuil K de l'ordre de 1200 bar/s et si la pression P maître-cylindre est suffisante pour l'application d'un couple électrique supplémentaire aux roues, c'est-à-dire que P est supérieur à un seuil S_PMC de l'ordre de 10 bar, alors le superviseur passe à l'étape 55. En variante, il suffit qu'une seule ou deux des trois conditions précitées soit remplies pour passer à l'étape 55.

Au cours de l'étape 55, le superviseur 24 interroge la machine 3 électrique ou le superviseur de traction 8 sur le potentiel de freinage de cette machine 3. En fonction de ce potentiel, c'est-à-dire du couple de freinage maximum que la machine 3 est susceptible d'appliquer aux roues, le superviseur 24 demande, dans une étape 56, l'application un couple de freinage électrique avec une dynamique d'application rapide.

A cet effet, dans l'étape 56, un échelon ayant comme valeur le potentiel de couple de la machine, est appliqué en entrée d'un premier filtre du premier ordre possédant une constante de temps de courte durée. L'échelon passe d'une valeur nulle à la valeur du couple maximal à l'instant t=0. Le signal de réponse du premier filtre est alors le signal de couple de consigne transmis à la machine 3 électrique.

Si les conditions de l'étape 54 ne sont pas remplies, le superviseur 24 passe à l'étape 57 dans laquelle il teste si le gradient de pression maître-cylindre gradP est inférieur à la valeur seuil S_FU, si la fonction d'assistance au freinage d'urgence AFU n'est pas enclenchée (cela devrait être le cas puisque la valeur S_FU est inférieure à la valeur K) et si la pression maître-cylindre P est suffisante, c'est-à-dire si la pression P est supérieure au seuil S_PMC.

Si les conditions de l'étape 57 sont remplies, alors le superviseur 24 passe à l'étape 58. Dans cette étape, comme dans l'étape 55, le superviseur 24 interroge la machine 3 électrique ou le superviseur 8 sur le potentiel de freinage de cette machine 3. En fonction de ce potentiel de freinage, le superviseur 24 commande, dans une étape 59, la réalisation d'un couple de freinage électrique avec une dynamique d'application lente.

A cet effet, dans l'étape 58, un échelon ayant comme valeur le potentiel de couple de la machine est appliqué en entrée d'un deuxième filtre du premier ordre possédant une constante de temps de durée élevée. L'échelon passe d'une valeur nulle à la valeur du couple maximal à l'instant t=0. Le signal de réponse du deuxième filtre est alors le signal de couple de consigne transmis à la machine 3 électrique.

Le premier filtre possède une constante de temps inférieure à celle du deuxième filtre. Dans une mise en oeuvre, la constante de temps du premier filtre est dix fois moins grande que la constante de temps du deuxième filtre. Par exemple, la constante de temps du premier filtre est de l'ordre de 10ms tandis que la constante de temps du deuxième filtre est de l'ordre de 100ms. Ces filtres sont paramétrables, leur constante de temps pouvant dépendre notamment de la dynamique et de la géométrie du véhicule.

Ainsi, dans les deux cas (application d'un couple de freinage avec une dynamique lente ou rapide), le niveau de couple demandé à la machine électrique 3 en fonction du potentiel disponible est paramétrable. A cet effet, deux tables de paramètres séparées sont stockées dans le superviseur 24, un tableau étant associée à chaque cas. En effet, pour chaque cas, le tableau comprend des valeurs de couple électrique dépendant du potentiel de freinage de la machine 3 électrique.

Une fois que la machine 3 a atteint le niveau du couple de consigne, elle le maintient dans une étape 60.

Et dès que dans une étape 61, le superviseur 24 détecte un blocage de roue (ABS=1) et/ou une différence de glissement droite-gauche (REF Droite/Gauche=1) qui engendre l'activation de la fonction ABS ou ESP, alors on passe à l'étape 62 dans laquelle l'application du couple électrique supplémentaire est interrompue.

Ensuite, dans une étape 63, on détecte si le conducteur a arrêté d'appuyer sur la pédale de frein ou non. On considère que la pédale est relâchée si le capteur BLS émet un signal d'une valeur logique 0 pendant une durée de temporisation supérieure à la durée T. Si la pédale 20 est relâchée, alors on revient à l'étape 51. En revanche, si la pédale 20 n'est pas relâchée, alors on revient à l'étape 60.

Par ailleurs, dans le cas où à l'étape 61, on ne détecte pas de blocage de roue ni de différence de glissement, on passe à l'étape 64. Dans cette étape, on détecte si le conducteur a arrêté d'appuyer sur la pédale de frein ou non, comme dans l'étape 63. Si la pédale n'est pas relâchée alors on revient à l'étape 60. En revanche, si la pédale 20 est relâchée, alors on passe à l'étape 65 (identique à l'étape 62) dans laquelle l'application du couple électrique supplémentaire est interrompue.

Autrement dit, dans le cas de l'activation d'une fonction de régulation de freinage 61 ou d'un relâchement de la pédale de frein 64, la requête de couple électrique est instantanément mise à zéro. Et le procédé de freinage selon l'invention est initialisé après la détection d'un lâcher de pédale de frein suffisamment long.

Le système de freinage dispose d'une capacité de détection des défaillances du capteur 41 BLS, du capteur 43 de pression maître-cylindre, du flux d'information entre la machine 3 électrique et le superviseur 24 frein et de la machine 3 électrique. En cas de défaillance d'un de ces organes, la fonction de freinage électrique selon l'invention est inhibée.

En variante, on distingue plus d'un seuil de gradient de pression et d'autres filtres sont définis en conséquence.

En variante, le couple de freinage électrique varie directement en fonction du gradient de pression gradP mesuré.

## Revendications

1. Procédé de freinage pour un véhicule (1), notamment un véhicule automobile hybride, comportant un moteur thermique et une machine (3) électrique formant une chaîne de traction, cette chaîne de traction étant reliée à des roues (2.1-2.4) du véhicule (1), ce véhicule comportant une pédale (20) de frein qui commande le freinage hydraulique du véhicule, ce procédé étant **caractérisé par** les étapes suivantes, lorsqu'un appui sur la pédale (20) de frein du véhicule est détecté :
- on compare la valeur du gradient de pression (gradP) hydraulique engendré par cet appui à une valeur seuil (S_FU),
- si ce gradient de pression (gradP) est supérieur à ce seuil (S_FU) alors on calcule la réponse d'un premier filtre à un échelon ayant la valeur du couple maximal de la machine (3) électrique,
- si ce gradient de pression (gradP) est inférieur à ce seuil (S_FU) alors on calcule la réponse d'un deuxième filtre à un échelon ayant la valeur du couple maximal de la machine (3) électrique, puis
- on commande la machine (3) électrique de sorte que le couple électrique de freinage de cette machine appliqué sur les roues (2.1-2.4) suive la réponse calculée,
- les premier et deuxième filtres étant des filtres du premier ordre,
- le premier filtre ayant une constante de temps inférieure à celle du deuxième filtre.

2. Procédé selon la revendication 1, **caractérisé en ce que** :
- on considère que la pédale (20) est appuyée lorsque l'enfoncement détecté par un capteur contacteur de frein de type BLS se produit pendant une durée qui est supérieure à une durée de temporisation (T).

3. Procédé selon la revendication 1 ou 2, **caractérisé en ce que** :
- la constante de temps du premier filtre est 10 fois moins grande que celle du deuxième filtre.

4. Procédé selon la revendication 3, **caractérisé en ce que** :
- la constante de temps du premier filtre est de l'ordre de 10 millisecondes, tandis que
- la constante de temps du deuxième filtre est de l'ordre de 100 millisecondes.

5. Procédé selon l'une revendications 1 à 4, **caractérisé en ce que** :
- la machine (3) électrique applique son couple de freinage si la pression maître-cylindre (P) est supérieure à une valeur seuil (S_PMC).

6. Procédé selon l'une des revendications 1 à 5, **caractérisé en ce que**, le véhicule possédant des fonctions de régulation de freinage :
- la machine (3) électrique applique le couple électrique de freinage si les conditions dynamiques du véhicule sont normales et si les fonctions de régulation de freinage ne sont pas activées.

7. Procédé selon l'une des revendications 1 à 6, **caractérisé en ce que** :
- la machine électrique (3) n'applique plus de couple de freinage dès qu'une des fonctions de régulation de freinage (ABS, ESP) est activée ou dès que la pédale (20) de frein est relâchée.

8. Procédé selon l'une des revendications 1 à 7, **caractérisé en ce que** :
- le gradient de pression (gradP) est mesuré à l'aide d'un capteur de pression positionné sur un maître-cylindre (12) qui transforme l'appui sur le frein en une pression hydraulique, cette pression hydraulique étant transformée en un couple de freinage par les freins (16.1-16.4).

9. Procédé selon l'une des revendications 1 à 8, **caractérisé en ce que** :
- le seuil du gradient de pression (S_FU) a une valeur de 600 bar/s.

## Claims

1. Braking method for a vehicle (1), in particular a hybrid automobile vehicle, comprising a heat engine and an electric machine (3) forming a power train, this power train being connected to wheels (2.1-2.4) of the vehicle (1), this vehicle comprising a brake pedal (20) which controls the hydraulic braking of the vehicle, this method being **characterized by** the following stages, when a pressure on the brake pedal (20) of the vehicle is detected:
- the value of the hydraulic pressure gradient (gradP) generated by this pressure is compared with a threshold value (S_FU),
- if this pressure gradient (gradP) is greater than this threshold (S_FU), then the response is calculated of a first filter at a step having the value of the maximum torque of the electric machine (3),
- if this pressure gradient (gradP) is less than this threshold (S_FU), then the response is calculated of a second filter at a step having the value of the maximum torque of the electric machine (3), then
- the electric machine (3) is controlled such that the electric braking torque of this machine applied to the wheels (2.1-2.4) follows the calculated response,
- the first and second filters being filters of the first order,
- the first filter having a lower time constant than that of the second filter.

2. Method according to Claim 1, **characterized in that**:
- the pedal (20) is considered to be pressed when the depression detected by a brake contactor pickup of the BLS type occurs for a duration which is greater than a dwell time duration (T).

3. Method according to Claim 1 or 2, **characterized in that**:
- the time constant of the first filter is 10 times less great than that of the second filter.

4. Method according to Claim 3, **characterized in that**:
- the time constant of the first filter is in the order of 10 milliseconds, whereas
- the time constant of the second filter is in the order of 100 milliseconds.

5. Method according to one of Claims 1 to 4, **characterized in that**:
- the electric machine (3) applies its braking torque if the master cylinder pressure (P) is greater than a threshold value (S_PMC).

6. Method according to one of Claims 1 to 5, **characterized in that**, with the vehicle having functions for regulating braking:
- the electric machine (3) applies the electric braking torque if the dynamic conditions of the vehicle are normal and if the braking regulation functions are not activated.

7. Method according to one of Claims 1 to 6, **characterized in that**:
- the electric machine (3) no longer applies the braking torque as soon as one of the braking regulation functions (ABS, ESP) is activated or as soon as the brake pedal (20) is released.

8. Method according to one of Claims 1 to 7, **characterized in that**:
- the pressure gradient (gradP) is measured by means of a pressure pickup positioned on a master cylinder (12) which transforms the pressure on the brake into a hydraulic pressure, this hydraulic pressure being transformed into a braking torque by the brakes (16.1-16.4).

9. Method according to one of Claims 1 to 8, **characterized in that**:
- the threshold of the pressure gradient (S_FU) has a value of 600 bar/s.

## Patentansprüche

1. Verfahren zum Bremsen für ein Kraftfahrzeug (1), insbesondere ein Hybridautomobil, das einen Verbrennungsmotor und eine Elektromaschine (3) aufweist, die eine Zugkette bilden, wobei diese Zugkette mit Rädern (2.1-2.4) des Fahrzeugs (1) verbunden ist, wobei dieses Fahrzeug ein Bremspedal (20) aufweist, das das hydraulische Bremsen des Fahrzeugs steuert, wobei dieses Verfahren, wenn ein Druck auf das Bremspedal (20) des Fahrzeugs erfasst wird, durch die folgenden Schritte **gekennzeichnet** ist:
- Vergleichen des Werts des hydraulischen Druckgradienten (gradP), der durch diesen Druck erzeugt wird, mit einem Schwellenwert (S_FU),
- wenn dieser Druckgradient (gradP) größer ist als dieser Schwellenwert (C_FU), Berechnen der Reaktion eines ersten Filters mit einer Stufe, die den Wert des maximalen Moments der Elektromaschine (3) hat,
- wenn dieser Druckgradient (gradP) kleiner ist als der Schwellenwert (S_FU), Berechnen der Reaktion eines zweiten Filters mit einer Stufe, die den Wert des maximalen Moments der Elektromaschine (3) hat, dann
- Steuern der Elektromaschine (3) derart, dass das elektrische Bremsmoment dieser Maschine, das an die Räder (2.1-2.4) angelegt wird, der berechneten Reaktion folgt,
- wobei das erste und das zweite Filter Filter des ersten Rangs sind,
- wobei das erste Filter eine Zeitkonstante hat, die kleiner ist als die des zweiten Filters.

2. Verfahren nach Anspruch 1, **dadurch gekennzeichnet, dass**:
- man davon ausgeht, dass das Pedal (20) gedrückt ist, wenn das Eindrücken, das von einem Bremsschaltersensor des Typs BLS erfasst wird, während einer Dauer auftritt, die größer ist als eine Verzögerungsdauer (T).

3. Verfahren nach Anspruch 1 oder 2, **dadurch gekennzeichnet, dass**:
- die Zeitkonstante des ersten Filters 10 Mal kleiner ist als die des zweiten Filters.

4. Verfahren nach Anspruch 3, **dadurch gekennzeichnet, dass**:
- die Zeitkonstante des ersten Filters in der Größenordnung von 10 Millisekunden liegt, während
- die Zeitkonstante des zweiten Filters in der Größenordnung von 100 Millisekunden liegt.

5. Verfahren nach einem der Ansprüche 1 bis 4, **dadurch gekennzeichnet, dass**:
- die Elektromaschine (3) ihr Bremsmoment anlegt, wenn der Hauptzylinderdruck (P) größer ist als ein Schwellenwert (S_PMC).

6. Verfahren nach einem der Ansprüche 1 bis 5, **dadurch gekennzeichnet, dass**, wenn das Fahrzeug Bremsregulierfunktionen besitzt:
- die Elektromaschine (3) das elektrische Bremsmoment anlegt, wenn die dynamischen Bedingungen des Fahrzeugs normal sind, und wenn die Bremsregulierfunktionen nicht aktiviert sind.

7. Verfahren nach einem der Ansprüche 1 bis 6, **dadurch gekennzeichnet, dass**:
- die Elektromaschine (3) kein Bremsmoment mehr anlegt, sobald eine der Bremsregulierfunktionen (ABS, ESP) aktiviert ist oder sobald das Bremspedal (20) frei gegeben wird.

8. Verfahren nach einem der Ansprüche 1 bis 7, **dadurch gekennzeichnet, dass**:
- der Druckgradient (gradP) mit Hilfe eines Drucksensors gemessen wird, der auf einem Hauptzylinder (12) positioniert ist, der den Druck auf die Bremse in einen hydraulischen Druck umwandelt, wobei dieser hydraulische Druck von den Bremsen (16.1-16.4) in ein Bremsmoment umgewandelt wird.

9. Verfahren nach einem der Ansprüche 1 bis 8, **dadurch gekennzeichnet, dass**:
- der Schwellenwert des Druckgradienten (S_FU) einen Wert von 600 bar/s hat.
